# EUROPÄISCHE PATENTANMELDUNG

(11) **EP 3 009 298 A2**
(43) Veröffentlichungstag der Anmeldung: **20.04.2016**
(21) Anmeldenummer: 15189605.7
(22) Anmeldetag: 13.10.2015
(51) Int. Cl.: B60P 1/64

(54) **SYSTEM ZUR VARIABLEN BELADUNG EINES FAHRZEUGS**

(30) Priorität: 15.10.2014 DE 102014114996
(71) Anmelder: Ingwersen, Hilmar, 50226 Frechen (DE)
(72) Erfinder: Ingwersen, Hilmar, 50226 Frechen (DE)
(74) Vertreter: Fritz, Edmund Lothar

(57) **Zusammenfassung**

Die vorliegende Erfindung betrifft ein System zur Beladung eines Fahrzeugs mit einer Ladung oder Aufbringung eines auswechselbaren Ladeaufbaus auf ein Fahrzeug, wobei dieses System wenigstens eine Einrichtung am Fahrzeug zur Aufnahme der Ladung oder des Ladeaufbaus umfasst sowie wenigstens eine mit der Einrichtung zusammenwirkende Tragvorrichtung, auf der sich die Ladung oder der Ladeaufbau befindet. Erfindungsgemäß ist die Einrichtung am Fahrzeug eine in der Ladelängsrichtung des Fahrzeugs offen zugängliche Führungseinrichtung (23, 24) und die mit dieser Führungseinrichtung zusammenwirkende Tragvorrichtung umfasst wenigstens ein in Ladelängsrichtung des Fahrzeugs in diese Führungseinrichtung geführt eingreifendes einschiebbares Tragprofil (14, 17), wobei eine Verriegelungseinrichtung (20) für den Eingriff zwischen Führungseinrichtung (23, 24) und Tragprofil (14, 17) vorgesehen ist, wobei durch Lösen dieser Verriegelungseinrichtung (20) der Eingriff zwischen Führungseinrichtung (23, 24) und Tragprofil lösbar ist und dann das Tragprofil nach oben hin von der Führungseinrichtung abhebbar ist. Die Erfindung schafft demnach ein System zur Beladung eines Fahrzeugs, das einen sehr einfachen und raschen Lade- und Entladevorgang zulässt und darüber hinaus sehr variabel ist, insofern als nicht nur unterschiedlichstes Ladegut aufgenommen werden, sondern auch verschiedenste Aufbauten mit unterschiedlicher Funktionalität auf das Chassis eines Grundfahrzeugs gebracht werden können.

## Beschreibung

Die vorliegende Erfindung betrifft ein System zur Beladung eines Fahrzeugs mit einer Ladung oder Aufbringung eines auswechselbaren Ladeaufbaus auf ein Fahrzeug, wobei dieses System wenigstens eine Einrichtung am Fahrzeug zur Aufnahme der Ladung oder des Ladeaufbaus umfasst sowie wenigstens eine mit der Einrichtung zusammenwirkende Tragvorrichtung, auf der sich die Ladung oder der Ladeaufbau befindet, wobei die Einrichtung am Fahrzeug eine in der Ladelängsrichtung des Fahrzeugs offen zugängliche Führungseinrichtung umfasst und die mit dieser Führungseinrichtung zusammenwirkende Tragvorrichtung wenigstens ein in Ladelängsrichtung des Fahrzeugs in diese Führungseinrichtung geführt eingreifendes einschiebbares Tragprofil umfasst.

Für die Beladung von Fahrzeugen wie beispielsweise LKWs mit Ladegut gibt es im Stand der Technik die verschiedensten Ansätze. Beispielsweise wird in der DE 299 22 540 U1 eine Beladevorrichtung für Transportfahrzeuge beschrieben, bei der ein selbstfahrend angetriebener gelenkiger Gliederschleppzug mit einem gelenkigen Entladeförderer und einer eigenen Lenkeinrichtung, einem Lenkantrieb, einer Steuerung und einer Messeinrichtung zur Ermittlung der korrekten Fahrtrichtung verwendet wird, um von einer Rampe aus die Ladefläche eines LKW zu beladen. Das Ladegut wird von dem Entladeförderer über eine Entladeschräge am vorderen Ende der Einrichtung abgeschoben, wobei sich der Gliederschleppzug taktweise rückwärts bewegt. Diese bekannte Einrichtung ist sehr aufwändig, in der Anschaffung kostenintensiv, hat eine komplexe Arbeitsweise und die Beladung eines Fahrzeugs mit einem solchen Gliederschleppzug ist zu zeitaufwändig.

In der EP 1 808 387 B1 wird ein Logistiksystem beschrieben, dem die prinzipielle Idee zu Grunde liegt, ein Fahrzeug über eine auf dessen Ladefläche liegende Plattform zu beladen oder entladen, wobei diese Plattform an einer Übergabestation von der Ladefläche geholt werden kann bzw. beim Beladen auf die Ladefläche geschoben wird. Das Logistiksystem umfasst auch einen Hochregallagerbereich und einen Kommissionierungsbereich, in dem die Waren für die spätere Beladung vorkommissioniert werden können. Um beim Beladen das Schieben der Plattform auf die Ladefläche zu ermöglichen, ist die Übergabestation um eine vertikale Achse schwenkbar ausgebildet und es ist weiterhin eine Hebevorrichtung vorgesehen, um einen hinteren Teil der Ladefläche oder den gesamten Trailer mit der Ladefläche anzuheben. Für die Übergabestation wird eine Längsfördereinheit benötigt. Das Beladen eines LKWs mit diesem bekannten Logistiksystem ist jedoch auch sehr kompliziert, da bereits der Vorgang des Manövrierens des Fahrzeugs in eine für das Beladen notwendige Parkposition sehr zeitraubend ist.

Grundsätzlich sind aus dem Stand der Technik Fahrzeuge bekannt, bei denen ein Transportaufbau in Form eines so genannten Wechselaufbaus verwendet wird, wie beispielsweise in der DE 198 20 074 beschrieben. Der Wechselaufbau hat in seinem unteren Bereich verschwenkbar angeordnete Bodenstützen, die in einer Hochlage des Wechselaufbaus senkrecht stehen und in eine Tieflage verschwenkt werden können, in der der abgestellte Wechselaufbau auf Füßen steht. In der Hochlage kann der Wechselaufbau aufgenommen werden, indem das Fahrzeug mit seiner Ladefläche unter den in der Hochlage stehenden Wechselaufbau fährt und dann die Bodenstützen eingeschwenkt werden. Alternativ werden in dieser Druckschrift auch Großcontainer für Schwergüter beschrieben, die schlittenartig auf einen LKW gezogen werden können. Der Container nimmt dabei vor der Aufnahme auf die Ladefläche eine Kippstellung ein. In beiden beschriebenen Varianten sind jedoch keine gegenseitigen Führungsmittel für den Aufnahmevorgang an der Ladefläche des Fahrzeugs bzw. am Container selbst beschrieben.

Aus der PCT-Schrift WO 90/08052 A1 sind grundsätzlich auf die Ladefläche eines Fahrzeugs ziehbare Aufbauten bekannt, die unterseitig mit Rollen versehen sind, um den Wechsel des Ladeaufbaus zu erleichtern. Um einen solchen Ladeaufbau aufzunehmen, ist jedoch vorgesehen, eine Heckklappe des pickup-ähnlichen Fahrzeugs nach hinten zu klappen und in eine geneigte Lage zu schwenken, um so eine schräge Rampe zu schaffen, über die der Ladeaufbau hochgezogen wird. Weiterhin ist es aus dieser Druckschrift bekannt, Ladeaufbauten zu verwenden, deren Länge geringer ist als die Abmessung der gesamten Ladefläche in Längsrichtung, so dass man mehrere kürzere Ladeaufbauten auf eine Ladefläche bringen kann, wodurch eine größere Variabilität bei der Nutzung des Laderaums gegeben ist.

Die DE 200 20 452 U1 beschreibt einen Wechselrahmen für abnehmbare Aufbauten von Fahrzeugen, bei der auf den Fahrgestellrahmen eines Trägerfahrzeugs ein auswechselbarer Grundrahmen mit Plattformen von oben her aufgesetzt und mit dem Fahrgestellrahmen des Trägerfahrzeugs verbunden wird. Auf den Grundrahmen kann wiederum eine Nutzlast von oben her lösbar aufgesetzt werden, wobei diese Nutzlast auch beispielsweise ein Fahrzeugaufbau mit einer spezifischen Funktionalität sein kann, wie z.B. ein Tankaufbau, Streuaufsatz für ein Streufahrzeug oder ein Werkstattaufbau. Für die lösbare Verbindung des auswechselbaren Grundrahmens mit dem Fahrgestellrahmen des Chassis des Trägerfahrzeugs sind Befestigungsbohrungen vorhanden, in die Befestigungselemente eingreifen, ebenso wie für die Verbindung der Nutzlast mit dem Grundrahmen. Es müssen somit jeweils Befestigungselemente gelöst werden, was einen Montagevorgang erfordert, so dass ein Wechsel der Ladung oder des Ladeaufbaus innerhalb kurzer Zeit nicht möglich ist.

Aus der DE 32 35 972 A1 ist ein Fahrzeug mit Wechselaufbau bekannt, welches einen Hubrahmen umfasst, der in eine Schräglage versetzt wird, einen Schieberahmen, der nach hinten hin ausfahrbar ist sowie einen Schlitten, der auf dem Schieberahmen über einen Hydraulikmotor verschiebbar montiert ist. Der Wechselaufbau wird in Schräglage des Hubrahmens und Schieberahmens abgesetzt. Beim Aufnehmen des Wechselaufbaus wird ein Zugseil verwendet, welches am Wechselaufbau eingehakt wird. Dieses bekannte Transportsystem ist für Abrollbehälter gedacht und ermöglicht nur die Aufnahme eines einzigen Behälters.

DE 34 32 754 A1 ist ein weiteres Fahrzeug mit Wechselaufbau bekannt, bei dem auf dem Fahrgestellrahmen zwei parallele Führungsschienen fest montiert sind, die eine Neigung nach hinten hin aufweisen. Zwar wäre es hier grundsätzlich möglich, mehrere Wechselaufbauten in Längsrichtung hintereinander auf das Fahrzeug zu laden, aber durch die Neigung der Führungsschienen ergeben sich erhebliche Einschränkungen im Anwendungsbereich. Beispielsweise können keine Flüssigkeiten in Transportbehältern aufgenommen werden. Durch die Schräge der Rampe ist ein Beladen von Hand ab einem gewissen Gewicht nicht mehr möglich. Es besteht wegen der Schräge keine Rampenhöhe, so dass ein Andocken an einer Verladerampe nicht möglich ist. Es handelt sich hier um eine spezifische Lösung, die für den Transport von Altpapier konzipiert ist.

In der EP 1 063 121 B1 wird eine Vorrichtung zur Handhabung von Wechselbehältern auf Fahrzeugen beschrieben, die ebenfalls für Abrollbehälter konzipiert ist und bei der auch immer nur ein Behälter auf dem Fahrzeug transportiert werden kann. Auch hier wird ein Kipprahmen verwendet, der Führungsschienen für einen Schlitten aufweist, welcher über eine Spindel und ein Getriebe angetrieben wird.

Die Aufgabe der vorliegenden Erfindung besteht darin, ein System zur Beladung eines Fahrzeug der eingangs genannten Gattung zur Verfügung zu stellen, das einen sehr einfachen und raschen Lade- und Entladevorgang zulässt, welches sehr variabel ist, insofern als nicht nur unterschiedlichstes Ladegut aufgenommen werden, sondern auch verschiedenste Aufbauten mit unterschiedlicher Funktionalität auf das Chassis eines Grundfahrzeugs gebracht werden können und welches einen hohen Sicherheitsstandard erfüllt.

Die Lösung dieser Aufgabe liefert ein System zur Beladung eines Fahrzeugs der eingangs genannten Gattung mit den Merkmalen des Hauptanspruchs.

Erfindungsgemäß ist eine Verriegelungseinrichtung für den Eingriff zwischen Führungseinrichtung und Tragprofil vorgesehen, wobei durch Lösen dieser Verriegelungseinrichtung der Eingriff zwischen Führungseinrichtung und Tragprofil lösbar ist und dann das Tragprofil nach oben hin von der Führungseinrichtung abhebbar ist. Durch diese Verriegelungseinrichtung wird im Betrieb ein ungewolltes Abheben der Ladung nach oben hin, beispielsweise bei unruhiger Fahrbahn, verhindert und damit wird eine erheblich höhere Verkehrssicherheit erreicht.

Ein weiterer Vorteil des erfindungsgemäßen Systems besteht darin, dass verschiedene Module von Ladeaufbauten gleichzeitig auf einem Fahrzeug transportiert werden können.

Die tragende Konstruktion kann mit einem vergleichsweise geringen Eigengewicht ausgeführt werden, wodurch sich Kraftstoff einsparen lässt und die Verriegelungseinrichtung ermöglicht eine erhöhte Zuladung und damit eine höhere Transportkapazität.

Auch lassen sich neuere Fahrzeuge verhältnismäßig einfach mit dem erfindungsgemäßen System nachrüsten. Das erfindungsgemäße System hat eine hohe Wirtschaftlichkeit und eine hohe Effektivität, insbesondere auch dadurch, dass sich Leefahrten erheblich reduzieren lassen, da beispielsweise auf einer Rückfahrt eine andersartige Ladung durch Verwendung eines anderen Typs Ladeaufbau aufgenommen werden kann.

Das erfindungsgemäße System ermöglicht schnelle Lade- und Entladezeiten, ist daher effektiv und lässt längere Ruhezeiten des Fahrers zu. Da gerade bei Sammelladungen und Stückguttransporten ein häufiges Umladen entfallen kann, wird die Ladung geschont.

Die Tragvorrichtungen und Ladeaufbauten können ohne vorheriges Absetzen direkt "Heck an Heck" von einem Fahrzeug auf ein anderes umgeladen werden.

Die Tatsache, dass die Ware nicht zwangsläufig umgeladen werden muss, kann bei wertvoller Ladung für einen erhöhten Diebstahlschutz sorgen, da Unbefugte keinen Zugang zur Ladung haben, auch in Verbindung mit der erfindungsgemäß vorgesehenen Verriegelungseinrichtung.

Gegebenenfalls können die Tragvorrichtung und die Führungseinrichtung auf dem Fahrzeug auch in Querrichtung angeordnet sein, so dass in Querrichtung geladen wird, beispielsweise bei einem Modul, dessen Länge der Breite des Fahrzeugs entspricht und wenn man ein solches Modul beispielsweise auf einen Anhänger wie zum Beispiel einem Stromerzeuger verlädt.

Die Erfindung liefert demnach eine Lösung, mittels derer mit vergleichsweise geringem Aufwand und in verhältnismäßig kurzer Zeit eine Ladung oder ein Ladeaufbau auf ein Fahrzeug gebracht werden kann, beispielsweise auf das Chassis eines LKWs. Ein Vorteil des erfindungsgemäßen Systems besteht beispielsweise darin, dass man Ware auf der Tragvorrichtung vorkonfektionieren und bereits transportsicher befestigen kann, so dass nach dem raschen Vorgang des Aufschiebens der Tragvorrichtung auf die Führungseinrichtung auf dem Fahrzeug selbst der sonst zeitaufwändige Vorgang des Sicherns der Ladung beispielsweise durch Verzurren entfallen kann. Der Ladevorgang ist zudem viel einfacher als bei den oben geschilderten Systemen, bei denen beladene Plattformen mittels aufwändiger Längsfördereinheiten auf das Fahrzeug geschoben werden, da man bei der erfindungsgemäßen Vorgehensweise sogar gegebenenfalls die Ladung auf der Tragvorrichtung antriebslos auf das Fahrzeug schieben kann, beispielsweise, wenn gemäß einer möglichen bevorzugten Variante Tragvorrichtung oder Führungseinrichtung über Rollen verfügen, um die Gleitreibung zu verringern.

Weitere Vorteile ergeben sich dadurch, dass aufwändige Messvorrichtungen und Sensoren, die ein genaues Manövrieren des Fahrzeugs in die Ladeposition, wie sie im Stand der Technik verwendet werden, in der Regel nicht nötig sind. Das Problem einer möglichen Kippstellung durch teilweises Einfedern des Fahrwerks des Fahrzeugs beim Beginn des Ladevorgangs stellt sich in der Regel ebenfalls nicht, da ja bereits von Beginn an ein Eingriff zwischen der Führungseinrichtung auf dem Fahrzeug und dem Tragprofil unter der Ladung hergestellt ist.

Der Kraftaufwand für das Aufschieben wird in der Regel auch dadurch verringert, dass man gemäß einer bevorzugten Weiterbildung der Erfindung das Fahrzeug so ausgebildet, dass sich bei Beladung/Entladung die Führungseinrichtung etwa in gleicher Höhe mit einer Ladeebene, insbesondere einer Rampe, befindet, auf der sich das Tragprofil mit der Ladung oder dem Ladeaufbau befindet, so dass die Ladung oder der Ladeaufbau auf im wesentlichen gleichen Niveau von der Ladeebene auf die Führungseinrichtung schiebbar ist.

Die erfindungsgemäße Führungseinrichtung auf dem Fahrzeug sowie auch das Tragprofil der Trageinrichtung, das die Ladung oder den Ladeaufbau trägt können beispielsweise aus Metall, aus geeigneten Kunststoffen, aus Verbundmaterialien oder auch aus anderen Werkstoffen bestehen, die ausreichend mechanisch belastbar sind und die geforderten Kräfte aufnehmen können.

Bevorzugt umfasst die erfindungsgemäße Führungseinrichtung eine oder mehrere auf oder in dem Fahrzeug fest montierte Führungsschiene(n). Man kann somit beispielsweise des Chassis eines LKWs oder eines Anhängers einmalig so umbauen, dass man es mit einer fahrzeugseitig fest verankerten Führungsschiene versieht und man erhält auf diese Weise ein Fahrzeug, welches im Rahmen des erfindungsgemäßen Systems vielfältig verwendbar ist. Es können dann flächige Ladungsträger wie Paletten oder Plattformen, die das Tragprofil aufweisen, auf die Führungsschiene geschoben werden. Auf den Paletten oder Plattformen kann sich gegebenenfalls bereits transportfest verankerte Ladung befinden. Oder aber es wird ein spezifischer Ladeaufbau, der ebenfalls unterseitig des Tragprofil aufweist, auf das Fahrzeug geschoben, wodurch dieses in ein Fahrzeug mit einer definierten Funktionalität umgewandelt wird, beispielsweise in ein Tankfahrzeug oder ein Müllfahrzeug oder ähnliches. Diese Variabilität der Fahrzeugkonfiguration ermöglicht auch eine bessere Ausnutzung in einem Fuhrpark vorhandener Fahrzeuge, denn ein Spediteur kann beispielsweise mit einem Fahrzeug Container oder Palettenware von A nach B transportieren, das Fahrzeug dann durch Aufnahme eines Tankladeaufbaus umfunktionieren und auf der Rückfahrt von B nach A flüssige Ladung im Tank transportieren.

Auch erleichtert das erfindungsgemäße System in vielen Fällen den Beladungsvorgang, da man beispielsweise schwere und/oder große sperrige Lasten schon direkt nach der Fertigung am Fertigungsort auf einem Tragprofil vormontieren kann, so dass dann bei der Beladung das Tragprofil nur noch auf die Führungsschiene des Fahrzeugs geschoben oder gezogen werden muss. Das Anheben der schweren Last bei der Beladung erübrigt sich, so dass kein Kran erforderlich ist.

Bei leichteren Lasten kommt man bei der Beladung beispielsweise ohne Flurförderzeuge aus. Auch der innerbetriebliche Transport bis zum Verladeort wird erleichtert, denn das erfindungsgemäße System kann beispielsweise die bislang verwendeten Paletten einsparen, wenn die zu verladenden Lasten direkt auf ein Tragprofil montiert werden. Man kann das System daher auch vorteilhaft in Verbindung mit einem Logistik- und Lagersystem nutzen und beispielsweise auf den Tragprofilen montierte Waren in einem Hochregallager einlagern, in dem die Förderung auch auf mit dem Tragprofil korrespondierenden Führungseinrichtungen (z.B. Schienen) erfolgt.

Gemäß einer möglichen bevorzugten Variante der vorliegenden Erfindung ist die Führungseinrichtung in Querrichtung des Fahrzeugs gesehen etwa mittig angeordnet und erstreckt sich in Ladelängsrichtung. Eine solche etwa mittige Führungseinrichtung, z. B. Führungsschiene, genügt, um die Ladung in geführter Längsbewegung auf die Ladefläche zu überführen und in sicherer Position auf dem Fahrzeug zu verankern. Selbstverständlich können auch mehrere parallele Führungseinrichtungen auf dem Fahrzeug vorhanden sein.

Gemäß einer bevorzugten Weiterbildung der Erfindung ist das Tragprofil so geformt, dass es Teilbereiche der Führungseinrichtung übergreift. Es ergeben sich dann wechselseitige Führungsbereiche und Anlageflächen zwischen Führungseinrichtung und Tragprofil, die eine geführte Bewegung des Tragprofils an der Führungseinrichtung beim Einschieben des Tragprofils in Längsrichtung bewirken, wodurch ein Abheben des Tragprofils nach oben hin und/oder seitliche Verschiebebewegungen des Tragprofils relativ zur Führungseinrichtung in der Eingriffsstellung verhindert werden. Es kann ein mindestens teilweiser Formschluss zwischen Tragprofil und Führungseinrichtung gegeben sein, was aber keineswegs notwendig ist, insbesondere dann nicht, wenn man beispielsweise mit einer Rollenführung arbeitet. Vorzugsweise wird in einer Eingriffsstellung von Tragprofil und Führungseinrichtung auch automatisch oder nach Betätigen einer Feststellvorrichtung eine ungewollte Verschiebebewegung in Ladelängsrichtung verhindert.

Durch Lösen der Verriegelungseinrichtung ist der Eingriff zwischen Führungseinrichtung und Tragprofil lösbar und dann ist das Tragprofil nach oben hin von der Führungseinrichtung abhebbar. Dies lässt beispielsweise bei Beladung eines Fahrzeugs mit mehreren Ladungsmodulen in Längsrichtung hintereinander zu, nur ein einzelnes in der Reihe angeordnetes Ladungsmodul mittels einer Hubvorrichtung (z.B. eines Krans) nach oben hin von dem Fahrzeug abzuheben, ohne dass es notwendig ist zunächst die anderen Ladungsmodule von der Führungsschiene herunter zu schieben.

Das Lösen des Verriegelungseingriffs kann beispielsweise dadurch ermöglicht werden, dass Teilbereiche des Tragprofils von einer mittigen Eingriffsstellung mit der Führungseinrichtung ausgehend zu beiden Seiten hin nach innen oder auch nach außen bewegbar sind. Als Verriegelungseinrichtung können beispielsweise Zahnstangen und mit diesen korrespondierende Zahnprofile jeweils an Führungseinrichtung und/oder Tragprofil vorgesehen sein.

Da es gemäß einer bevorzugten Weiterbildung der Erfindung möglich ist, dass das Tragprofil und/oder der Ladeaufbau und oder eine Palette oder Plattform, die die Ladung trägt, wenn es sich nicht über die gesamte Länge der Führungseinrichtung erstreckt, sich nur über eine Teillänge der Länge der Führungseinrichtung erstreckt, können mehrere Ladeaufbauten, Paletten oder Plattformen mit Ladung jeweils mit ihrem Tragprofil in Ladelängsrichtung hintereinander auf die Führungseinrichtung geschoben werden. Dies können sehr unterschiedliche Ladeaufbauten und verschiedenartige Ladungsmodule auch unterschiedlicher Länge, Breite und Höhe auf einem Fahrzeug sein, wodurch sich die sehr variable Nutzung des erfindungsgemäßen Systems ergibt. Der Ladeaufbau und/oder das Tragprofil können auch länger sein als die Führungseinrichtung, so dass die Ladung beispielsweise auch über die Fahrzeuglänge überstehen kann, wodurch die Ladekapazität des Fahrzeugs erhöht wird.

Da vorzugsweise das Fahrzeug so ausgebildet ist, dass sich bei Beladung/Entladung die Führungseinrichtung etwa in gleicher Höhe mit einer Ladeebene, insbesondere mit einer Rampe, befindet, auf der sich das Tragprofil mit der Ladung oder dem Ladeaufbau befindet, ist die Ladung oder der Ladeaufbau auf im wesentlichen gleichen Niveau von der Ladeebene auf die Führungseinrichtung schiebbar ist. Die Höhe der üblichen Rampen im Anlieferbereich von Lagern, an denen LKWs andocken ist meistens genormt. Man kann daher das Fahrzeug so konstruieren, dass sich die Führungseinrichtung in an die übliche Rampenhöhe angepasster Höhe befindet. Dies hat den Vorteil, dass man für das Aufschieben der Last auf die Ladefläche nicht unbedingt einen eigenen Antrieb benötigt, denn es entsteht keine Schräge. Gegebenenfalls kann die Ladung sogar antriebslos von Hand auf das Fahrzeug geschoben werden, insbesondere, wenn man im Bereich der Führungseinrichtung und/oder des Tragprofils mit Rollen arbeitet, um die Reibungskräfte zu verringern.

Das erfindungsgemäße System ist bei den unterschiedlichsten Fahrzeugtypen einsetzbar. Beispielsweise kann die Führungseinrichtung auf einem Landfahrzeug, beispielsweise auf dem Chassis eines LKWs, auf einem Sattelschlepper, einem LKW-Anhänger, einem PKW-Anhänger, einem Pickup, einem Container-Fahrzeug oder dergleichen verwendet werden. Das System ist zudem nicht auf Fahrzeuge für den Landtransport auf der Straße beschränkt, sondern kann auch angewandt werden auf einem Schienenfahrzeug, einem Wasserfahrzeug, in einem Luftfahrzeug wie zum Beispiel einem Hubschrauber oder Zeppelin, in einem Flugzeug oder in einem Gebäude, insbesondere in einem Lagerhaus, einem Hochregallager oder einem Parkhaus. Besonders vorteilhaft ist dabei, dass man das System im Bereich von Schnittstellen im Gütertransport nutzen kann, zum Beispiel bei der Übergabe von Schiffsladung in Containern an LKWs oder im Güterverkehr bei der Umladung von Containern oder anderer Ware von einem Schienenfahrzeug auf ein Straßenfahrzeug oder umgekehrt.
Das erfindungsgemäße System kann weiter auch für den Transport in Flugzeugen, insbesondere in Großraumflugzeugen genutzt werden. Die Führungseinrichtungen können auch in den Laderaum des Flugzeugs eingebaut werden, so dass die auf Tragprofilen befindliche Ladung vom Flugzeug beispielsweise auf einen LKW übergeben werden kann. Gegebenenfalls verwendet man hier Hubeinrichtungen, um einen durch die Bauart des Flugzeugs bedingten Niveauunterschied auszugleichen. Ebenso ist das System für den Transport von Gütern auf Wasserfahrzeugen (Schiffen) geeignet.

Ein anderer interessanter Bereich ist die Verwendung für den Transport von PKWs in Parkhäusern. Dazu kann das Chassis eines PKWs beispielsweise unterseitig im Bereich des Unterbodens mit einem dort montierten Tragprofil ausgerüstet sein. Gegebenenfalls sieht man dabei vor, dass das Tragprofil bei Nichtgebrauch einklappbar ist (ähnlich wie dies schon bei einschwenkbaren Anhängerkupplungen an PKWs bekannt ist.) Auf diese Weise wird im Straßenverkehr eine zu geringe Bodenfreiheit durch das im Bodenbereich nach unten ragende Tragprofil verhindert. Der PKW kann im Parkhaus so manövriert werden, dass dieser mit dem Tragprofil auf eine korrespondierende Führungseinrichtung im Parkhaus auffährt, so dass zwischen diesen Führungsmitteln ein Eingriff hergestellt wird. Der Fahrer kann dann das Fahrzeug verlassen und dieses wird über ein Fördersystem in eine Parkbox in dem Parkhaus eingelagert. Benötigt der Fahrer das Fahrzeug wieder, fordert er dieses an, beispielsweise über sein Smartphone oder durch Betätigung eines Schalters oder Bedienknopfs, oder der Vorgang wird beim Bezahlen an der Kasse des Parkhauses ausgelöst, so dass der Fahrer beim Verlassen bereits sein inzwischen an eine vorgesehene Übergabestelle gefördertes Fahrzeug ohne zeitliche Verzögerung entgegennehmen kann.

Sind PKWs oder LKWs unterseitig mit solchen Tragprofilen ausgerüstet, kann man dies auch beispielsweise in Werkstätten nutzen. Dort kann ein Fahrzeug auf eine mit der korrespondierenden Führungseinrichtung versehene Hebebühne auffahren und wird nach dem Eingriff, gegebenenfalls nach Verriegelung der Führungselemente auf der Hebebühne sicher gehalten.

Die erfindungsgemäße Führungseinrichtung kann sich zum Beispiel auch an einem Gabelstapler, einem Kran, einem Hebezeug, einem Flurförderzeug oder einer anders gearteten Transporteinrichtung befinden, die dann über die genannte Tragvorrichtung mit dem Tragprofil in der zuvor geschilderten Art und Weise eine Ladung oder einen Ladeaufbau aufnimmt.

Die Tragvorrichtung kann beispielsweise auch optional mit weiteren Rollen ausgestattet sein, so dass die Ladung oder der Ladeaufbau auch in einem Zustand, in dem kein Eingriff mit einer Führungseinrichtung eines Fahrzeugs besteht, auf einem Untergrund auf diesen Rollen verschoben werden kann.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben.

Dabei zeigen:
Figur 1 eine Ansicht eines beispielhaften Tragprofils, auf dem das Ladegut oder ein Ladeaufbau befestigt wird;
Figur 2 eine vergrößerte Ansicht eines Detailausschnitts des Tragprofils von Figur 1 in der Verriegelungsposition;
Figur 3 eine entsprechende Ansicht des Tragprofils von Figur 2 in der unverriegelten Position;
Figur 4 eine Seitenansicht des Tragprofils von Figur 3 in Richtung des Pfeils IV von Figur 3 gesehen;
Figur 5 eine Ansicht einer auf dem Chassis eines LKWs montierten erfindungsgemäßen Führungseinrichtung, perspektivisch von der Rückseite des Fahrzeugs gesehen;
Figur 6 eine Querschnittansicht durch einen Teil der in Figur 5 dargestellten Führungseinrichtung;
Figur 7 eine Schnittdarstellung, die die Auflage eines Endbereichs des Tragprofils auf einer der Führungseinrichtungen des Fahrzeugs zeigt.

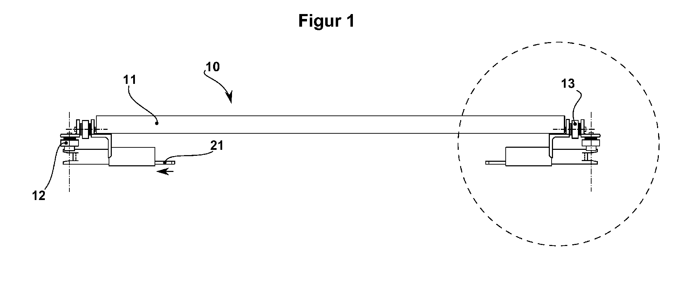

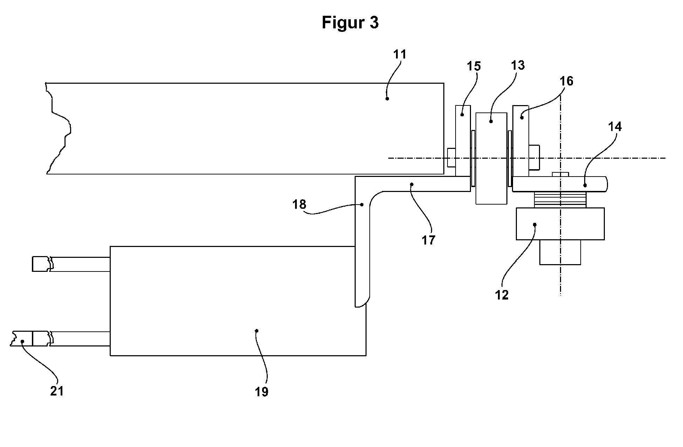

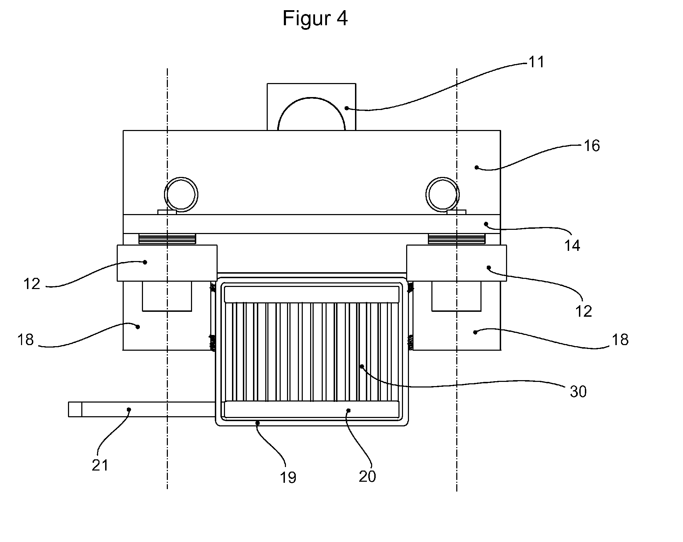

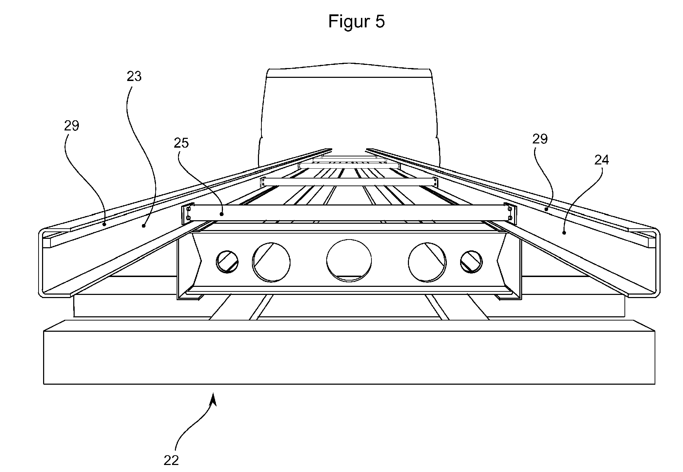

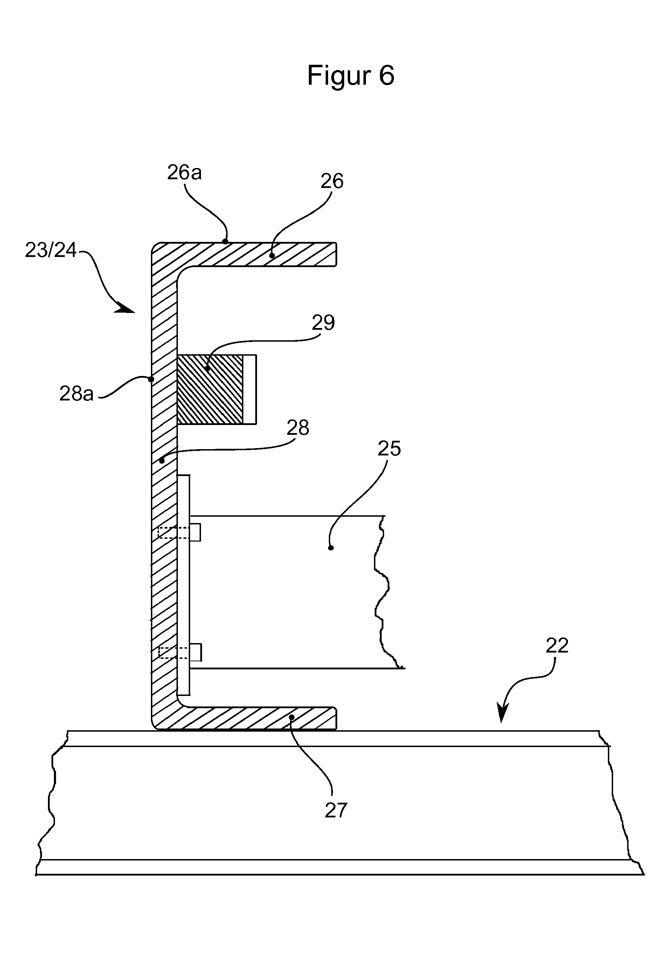

Zunächst wird unter Bezugnahme auf die Figuren 1 bis 4 der Aufbau eines Tragprofils, auf dem erfindungsgemäß die Ladung oder das Ladegut befestigt wird, näher erläutert. Das insgesamt mit dem Bezugszeichen 10 bezeichnete Tragprofil umfasst einen sich in der montierten Position in Querrichtung der Ladefläche erstreckenden Träger 11, auf dem beispielsweise eine Plattform oder dergleichen (hier nicht dargestellt) befestigt werden kann, auf der wiederum das Ladegut aufgebracht werden kann. Oder ein Ladeaufbau für eine spezifische Fahrzeugtype wird auf einem oder mehreren Trägern 11 der in Figur 1 gezeigten Art befestigt. Jeweils endseitig an dem Träger 11 befindet sich an seinen beiden Endbereichen jeweils eine Einrichtung, die dazu dient, jeweils mit auf dem LKW angeordneten Führungsschienen einer Führungseinrichtung (siehe Figuren 5 und 6) zusammen zu wirken, wobei ein Eingriff zwischen dem Tragprofil gemäß Figur 1 und der Führungseinrichtung auf dem LKW hergestellt wird.

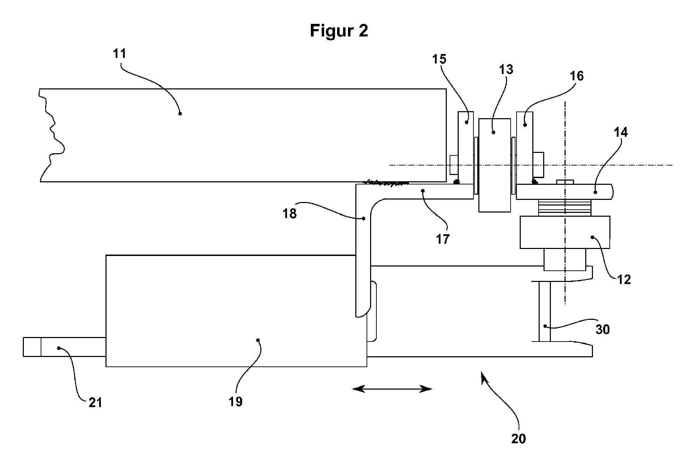

Ein Endbereich des Tragprofils 10 ist in Figur 2 vergrößert dargestellt. Wie man dort erkennt, befinden sich dort an dem Tragprofil diverse Rollen, durch die eine gleitende Bewegung des Tragprofils in Längsrichtung der Ladefläche des LKWs möglich wird, wenn sich das Tragprofil 10 im Eingriff mit der schienenartigen Führungseinrichtung auf dem LKW befindet. Dabei sind zum einen ein oder mehrere Rollen 12 vorgesehen, deren Achse sich im wesentlichen im rechten Winkel zur Erstreckung des Trägers 11 erstreckt, sowie ein oder mehrere weitere Rollen 13, deren Achsen jeweils zu den Achsen der Rollen 12 etwa rechtwinklig verlaufen. Diese Rollen 12, 13 sind jeweils an dem Tragprofil 10 um ihre Achse drehbar gelagert. Durch diese Anordnung der Rollen 12, 13 ist eine Führung des Tragprofils entlang zweier zueinander im wesentlichen senkrecht stehender Führungsflächen der Führungseinrichtung des LKWs gegeben. Die Rollen 12 können beispielsweise an der Unterseite eines im montierten Zustand etwa horizontal verlaufenden Flansches 14 im äußeren Endbereich des Tragprofils 10 angeordnet sind, derart, dass die Lauffläche der Rollen 12 nach außen hin gerichtet ist, wohingegen sich die weiteren Rollen 13 etwas weiter innen zur Mitte des Tragprofils 10 befinden und beispielsweise mit ihrer Lauffläche nach oben hin ausgerichtet sind. Die Rollen 13 können beispielsweise zwischen zwei Flanschen 15, 16 drehbar gelagert sein, welche auf der Oberseite einer Platte 17 befestigt sind, die wiederum mit dem Endbereich des Trägers 11 verbunden ist. Die weiteren Rollen 13 befinden sich somit auf der Oberseite der Platte 17, wobei ihre Rollenachse im montierten Zustand horizontal ausgerichtet ist. Die Rollen 12 befinden sich hingegen auf der Unterseite der Platte 17 und relativ zu den Rollen 13 etwas weiter außen und ihre Rollenachse verläuft im montierten Zustand in vertikaler Richtung und ist somit rechtwinklig zur Rollenachse der Rollen 13 ausgerichtet.

Mit der im montierten Zustand horizontalen Platte 17 verbunden ist eine weitere nach unten hin ausgerichtete Platte 18, die etwa im rechten Winkel zu der Platte 17 ausgerichtet ist, wobei beide Platten 17, 18 praktisch auch als Winkelplatte ausgebildet sein und aus einem Bauteil bestehen können. In dieser von dem Träger 11 gesehen nach unten hin ausgerichteten Platte 18 ist ein beispielsweise rechteckiges hohles kastenförmiges Führungsprofil 19 gelagert, welches verschiebbar eine Verriegelungseinrichtung 20 aufnimmt. Für die Betätigung der Verriegelungseinrichtung 20 von Hand ist an dieser ein Griff 21 angebracht. Das Verschieben der Verriegelungseinrichtung 20 erfolgt in das Führungsprofil 20 hinein bzw. aus dem heraus in Richtung des in Figur 1 eingezeichneten Pfeils, d.h. im Prinzip in einer Richtung, die parallel zur Erstreckung des Trägers 11 gerichtet ist und bezogen auf das Fahrzeug quer zur Längserstreckung der Ladefläche und somit quer zur Ausrichtung der Schienen der Führungseinrichtung auf dem Chassis des LKWs, entlang derer das Tragprofil 10 mit der Ladung verschoben wird. Die Verriegelungseinrichtung 20 dient dazu, einen Eingriff in Querrichtung zwischen dem Tragprofil 10 und der Führungseinrichtung auf dem Chassis des LKWs herzustellen, derart, dass das Tragprofil in einer vorgegebenen Einschubposition auf dem LKW fixiert ist und nicht weiter in Längsrichtung verschoben werden kann oder sich selbsttätig ungewollt (z.B. in einer Neigungslage des Fahrzeugs) auf dem Fahrzeug in Längsrichtung verschiebt. Diese Verriegelungseinrichtung 20 sorgt aber weiterhin auch dafür, dass das Tragprofil 10 und die auf diesem befindliche Ladung in der verriegelten Position nicht nach oben hin von den Führungsschienen der Führungseinrichtung des Fahrzeugs abheben können, was nachfolgend näher im Detail erläutert wird.

Nachfolgend wird zunächst unter Bezugnahme auf die Figuren 5 und 6 die erfindungsgemäße Führungseinrichtung auf dem Chassis des LKW näher beschrieben. Im Prinzip handelt es sich in dem Ausführungsbeispiel um eine Anordnung von zwei zueinander parallel verlaufenden auf das Chassis 22 montierten profilförmigen Führungsschienen 23, 24, die untereinander verbunden und ausgesteift sind durch mehrere in Querrichtung des Fahrzeugs verlaufende und in Längsrichtung der Ladefläche voneinander beabstandete Streben 25. Die Führungsschienen 23, 24 haben ein im Prinzip C-förmiges Profil mit zwei im montierten Zustand jeweils oben bzw. unten einwärts gerichtet verlaufenden etwa horizontalen Schenkeln 26, 27 und einem etwa vertikalen Steg 28, der in Querrichtung des LKW-Chassis gesehen jeweils außenseitig liegt, so dass beide Führungsschienen 23, 24 ein nach innen hin offenes C-Profil bilden und die beiden Schenkel 26, 27 von dem vertikalen Steg 28 an dessen oberem bzw. an dessen unterem Ende ausgehen. Wie man weiterhin aus Figur 6 erkennt, ist an der Innenseite des vertikalen Stegs 28 in beiden Führungsschienen jeweils eine Zahnstange 29 mit einem Zahnprofil angebracht. Die Funktion dieser Zahnstangen 29, die mit den oben beschriebenen Verriegelungseinrichtungen 20 des Tragprofils zusammenwirken, wird nachfolgend näher erläutert.

An den jeweils in Querrichtung gesehen nach außen hin gewandten Enden der in den kastenförmigen Führungsprofilen verschiebbaren Verriegelungseinrichtungen ist jeweils ein Zahnprofil 30 angebracht. Befindet sich das Tragprofil 10 auf dem Chassis des LKWs und ist somit in Längsrichtung in die Führungsschienen 23, 24 eingeschoben, wird zur Festlegung des Tragprofils 10 die Verriegelungseinrichtung 20 an dessen beiden Enden jeweils zum Beispiel mittels des Griffs 21 nach außen hin geschoben, wodurch die Zahnprofile 30, die sich (in Querrichtung gesehen) außenseitig an den Verriegelungseinrichtungen 20 befinden, in einen Eingriff mit den innenseitig an den Führungsschienen 23, 24 angebrachten Zahnstangen 29 gelangen, so dass danach ein Verschieben des Tragprofils 10 in Längsrichtung der Ladefläche nicht mehr möglich ist. Auf diese Weise ist die Ladung, die von dem Tragprofil 10 getragen wird oder der Ladeaufbau, der mit dem Tragprofil verbunden ist, auf dem Chassis des LKW in der vorgesehenen Position gesichert.

Werden mehrere Ladungseinheiten oder Ladeaufbau in Längsrichtung gesehen hintereinander in die Führungsschienen eingeschoben, kann es vorteilhaft sein, dass es möglich ist, eine einzelne Ladungseinheit, die vom Fahrzeug abgeladen werden soll, beispielsweise mittels einer geeigneten Hubvorrichtung nach oben hin abzuheben, ohne dass es dazu notwendig wird, zuvor andere Ladungseinheiten von der Ladefläche zu schieben, denn letzteres wäre zeitaufwändiger. Deshalb ist gemäß einer bevorzugten Variante der Erfindung vorgesehen, dass man den Eingriff zwischen den Führungsschienen 23, 24 des LKWs und dem Tragprofil Lösen und nach dem Lösen der Verriegelungseinrichtungen 20 das Tragprofil auch nach oben hin anheben kann. Dies ist dadurch möglich, dass sich die Verriegelungseinrichtungen 20 jeweils soweit nach innen ziehen lassen, dass sie jenseits des oberen horizontalen Schenkels 26 liegen, so dass dann kein Element des Tragprofils 10 mehr unterhalb des oberen horizontalen Schenkels 26 liegt und somit der Eingriff zwischen Führungsschienen 23, 24 und Tragprofil 10 gelöst ist und letzteres einfach nach oben hin abgehoben werden kann. Auf diese Weise kann einzelnes Ladegut von der Ladefläche des LKWs durch Anheben nach oben hin entfernt werden.

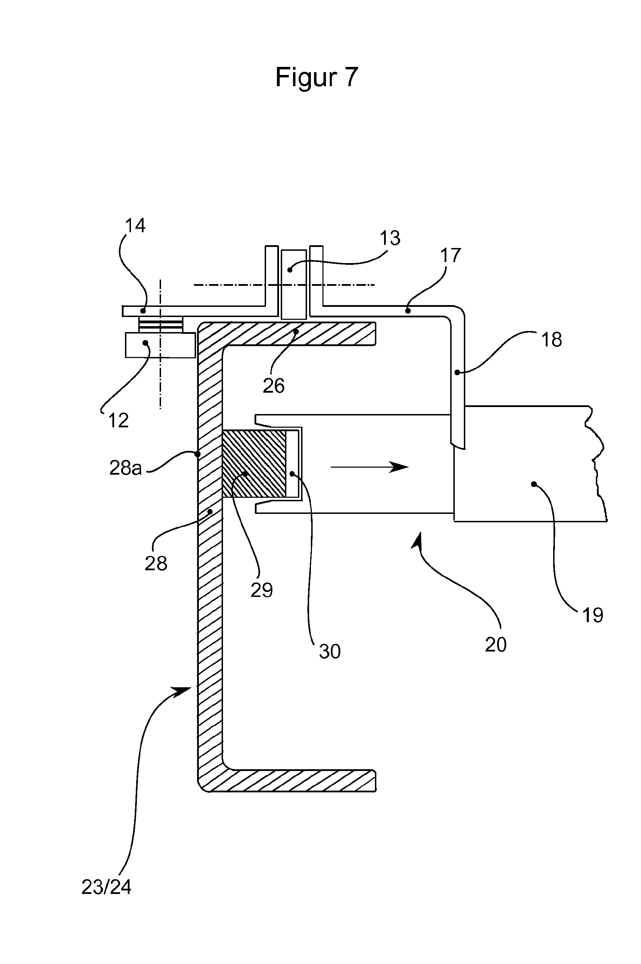

Nachfolgend wird unter Bezugnahme auf die Figuren 6 und 7 erläutert wie das eingeschobene Tragprofil 10 auf und in den Führungsschienen 23, 24 des LKWs liegt. Die Führungsschienen 23, 24 weisen eine horizontale Auflagefläche 26 a auf der Oberseite des oberen horizontalen Schenkels 26 auf, auf der beim Verschieben des Tragprofils 10 die weiteren Rollen 13 des Tragprofils abrollen. Weiterhin weisen die Führungsschienen 23, 24 eine vertikale Anlagefläche 28 a auf der Außenseite des vertikalen Stegs 28 auf, an der beim Verschieben des Tragprofils 10 die Rollen 12 des Tragprofils 10 abrollen. Somit sind zwei zueinander etwa rechtwinklig angeordnete Flächen 26 a und 28 a an den Führungsschienen 23, 24 vorhanden, auf denen Rollen des Tragprofils 10 abrollen können, wobei bei zwei Führungsschienen 23, 24 durch die Rollen 12 jeweils eine seitliche Führung endseitig an beiden Enden des Tragprofils 10 gegeben ist und ein seitliches Spiel des Tragprofils 10 in der Führungseinrichtung des LKW vermieden wird. Durch die oberen horizontalen Auflageflächen 26 a für die Rollen 13 ist eine gleitende Führung mit geringer Reibung auch bei hohem Eigengewicht der zu verschiebenden Ladung oder des Ladeaufbaus gegeben.

Wie man aus Figur 7 erkennen kann, in der ein Ende eines Tragprofils 10 im Eingriff mit einer Führungsschiene 23, 24 dargestellt ist, übergreifen die winkelförmig angeordneten Platten 17, 18 dann innenseitig den oberen horizontalen Schenkel 26 des C-Profils. Die Rolle 13 läuft auf der Auflagefläche 26 a und die Rolle 12 an dem Flansch 14 läuft auf der Außenfläche 28 a des vertikalen Schenkels 28 des C-Profils. Da die Platte 18 innenseitig des C-Profils der Führungsschiene nach unten ragt, liegt die in Querrichtung verschiebbare Verriegelungseinrichtung 20 unterhalb des oberen Schenkels 26 der Führungsschiene und kann in der vorgeschobenen Verriegelungsstellung, die in Figur 7 dargestellt ist, mit ihrem endseitigen Zahnprofil 30 in die Zahnstange 29 an der Innenseite des vertikalen Schenkels 28 des C-Profils eingreifen. Zieht man die Verriegelungseinrichtung 20 ein wenig einwärts, d.h. in der Zeichnung gemäß Figur 7 nach rechts, dann wird dieser Eingriff zwischen dem Zahnprofil 30 und der Zahnstange 29 gelöst und es ist dann möglich, das Tragprofil 10 in einer geführten Bewegung auf den beiden Führungsschienen 23, 24 in Längsrichtung der Ladefläche des Fahrzeugs zu verschieben. In der gewünschten Position kann man das Tragprofil durch erneutes Einschieben der Verriegelungseinrichtung 20 in die Zahnstange 29 erneut festlegen. Zieht man hingegen die Verriegelungseinrichtung 20 ganz zurück, d.h. so weit, dass diese jenseits der Flucht des oberen horizontalen Schenkels 26 liegt, dann ist es möglich mittels einer Hubvorrichtung das gesamte Tragprofil 10 nach oben aus den Führungsschienen 23, 24 zu heben und somit einzelnes Ladegut von der Ladefläche abzuheben.

### Bezugszeichenliste

- 10: Tragprofil
- 11: Träger
- 12: Rollen
- 13: Rollen
- 14: Flansch
- 15: Flansch
- 16: Flansch
- 17: Platte
- 18: Platte
- 19: kastenförmiges Führungsprofil
- 20: Verriegelungseinrichtung
- 21: Griff
- 22: Chassis
- 23: Führungsschiene
- 24: Führungsschiene
- 25: Streben
- 26: horizontaler Schenkel oben
- 27: horizontaler Schenkel unten
- 28: vertikaler Steg
- 29: Zahnstange
- 30: Zahnprofil

## Patentansprüche

1. System zur Beladung eines Fahrzeugs mit einer Ladung oder Aufbringung eines auswechselbaren Ladeaufbaus auf ein Fahrzeug, wobei dieses System wenigstens eine Einrichtung (23, 24) am Fahrzeug zur Aufnahme der Ladung oder des Ladeaufbaus umfasst sowie wenigstens eine mit der Einrichtung zusammenwirkende Tragvorrichtung (10), auf der sich die Ladung oder der Ladeaufbau befindet, wobei die Einrichtung am Fahrzeug eine in der Ladelängsrichtung des Fahrzeugs offen zugängliche Führungseinrichtung (23, 24) umfasst und die mit dieser Führungseinrichtung zusammenwirkende Tragvorrichtung wenigstens ein in Ladelängsrichtung des Fahrzeugs in diese Führungseinrichtung geführt eingreifendes einschiebbares Tragprofil (10) umfasst, **dadurch gekennzeichnet, dass** eine Verriegelungseinrichtung (20) für den Eingriff zwischen Führungseinrichtung (23, 24) und Tragprofil (10) vorgesehen ist, wobei durch Lösen dieser Verriegelungseinrichtung (20) der Eingriff zwischen Führungseinrichtung (23, 24) und Tragprofil (10) lösbar ist und dann das Tragprofil (10) nach oben hin von der Führungseinrichtung abhebbar ist.

2. System zur Beladung eines Fahrzeugs nach Anspruch 1, **dadurch gekennzeichnet, dass** die Führungseinrichtung eine oder mehrere auf oder in dem Fahrzeug fest montierte Führungsschiene(n) (23, 24) umfasst.

3. System zur Beladung eines Fahrzeugs nach Anspruch 1 oder 2, **dadurch gekennzeichnet, dass** die Führungseinrichtung (23, 24) die Form eines C-Profils oder umgekehrten L-Profils aufweist, mit wenigstens einem oberen horizontalen Schenkel (26) und einem vertikalen Schenkel (28).

4. System zur Beladung eines Fahrzeugs nach Anspruch 3, **dadurch gekennzeichnet, dass** der obere horizontale Schenkel (26) eine horizontale Auflagefläche (26 a) auf seiner Oberseite aufweist, auf der beim Verschieben des Tragprofils (10) Rollen (13) des Tragprofils abrollen und/oder dass Rollen (12) des Tragprofils (10) bei dessen Verschieben auf einer Außenfläche (28 a) des vertikalen Schenkels (28) der Führungseinrichtung (23, 24) abrollen.

5. System zur Beladung eines Fahrzeugs nach einem der Ansprüche 1 bis 4, **dadurch gekennzeichnet, dass** die Führungseinrichtung (23, 24) in Querrichtung des Fahrzeugs gesehen etwa mittig angeordnet ist und sich in Ladelängsrichtung erstreckt.

6. System zur Beladung eines Fahrzeugs nach einem der Ansprüche 1 bis 5, **dadurch gekennzeichnet, dass** das Tragprofil (10) so geformt ist, dass es Teilbereiche der Führungseinrichtung (23, 24) übergreift.

7. System zur Beladung eines Fahrzeugs nach einem der Ansprüche 1 bis 6, **dadurch gekennzeichnet, dass** sich an der Führungseinrichtung (23, 24) und/oder am Tragprofil (10) Rollen (12, 13) befinden.

8. System zur Beladung eines Fahrzeugs nach einem der Ansprüche 3 bis 7, **dadurch gekennzeichnet, dass** die Verriegelungseinrichtung derart ausgebildet ist, dass am Tragprofil (10) angebrachte Elemente der Verriegelungseinrichtung (20) in der Eingriffsstellung unterhalb des oberen horizontalen Schenkels (26) der Führungseinrichtung (23, 24) liegen.

9. System zur Beladung eines Fahrzeugs nach einem der Ansprüche 1 bis 8, **dadurch gekennzeichnet, dass** Teilbereiche des Tragprofils (10) von einer mittigen Eingriffsstellung mit der Führungseinrichtung (23, 24) ausgehend zu beiden Seiten hin nach innen bewegbar sind, um den Eingriff zwischen Führungseinrichtung und Tragprofil zu Lösen.

10. System zur Beladung eines Fahrzeugs nach einem der Ansprüche 1 bis 9, **dadurch gekennzeichnet, dass** als Verriegelungseinrichtung Zahnstangen (29) und mit diesen korrespondierende Zahnprofile (30) jeweils an Führungseinrichtung (23, 24) und/oder Tragprofil (10) vorgesehen sind.

11. System zur Beladung eines Fahrzeugs nach einem der Ansprüche 1 bis 10, **dadurch gekennzeichnet, dass** das Tragprofil (10) unterseitig an einer Palette oder Plattform angebracht ist, die die Ladung trägt oder das Tragprofil (10) unterseitig an einem Behälter, einem Container oder einem Ladeaufbau für das Fahrzeug mit spezifischer Funktionalität angebracht ist.

12. System zur Beladung eines Fahrzeugs nach einem der Ansprüche 1 bis 11, **dadurch gekennzeichnet, dass** das Tragprofil (10) und/oder der Ladeaufbau und oder eine Palette oder Plattform, die die Ladung trägt, sich über die gesamte Länge der Führungseinrichtung erstreckt, oder nur über eine Teillänge der Länge der Führungseinrichtung erstreckt, so dass mehrere Ladeaufbauten, Paletten oder Plattformen mit Ladung jeweils mit ihrem Tragprofil (10) in Ladelängsrichtung hintereinander auf die Führungseinrichtung (23, 24) schiebbar sind.

13. System zur Beladung eines Fahrzeugs nach einem der Ansprüche 1 bis 12, **dadurch gekennzeichnet, dass** das Fahrzeug so ausgebildet ist, dass sich bei Beladung/Entladung die Führungseinrichtung (23, 24) etwa in gleicher Höhe mit einer Ladeebene, insbesondere einer Rampe, befindet, auf der sich das Tragprofil (10) mit der Ladung oder dem Ladeaufbau befindet, so dass die Ladung oder der Ladeaufbau auf im wesentlichen gleichen Niveau von der Ladeebene auf die Führungseinrichtung schiebbar ist.

14. System zur Beladung eines Fahrzeugs nach einem der Ansprüche 1 bis 13, **dadurch gekennzeichnet, dass** die Führungseinrichtung (23, 24) auf einem Landfahrzeug, auf dem Chassis (22) eines LKWs, auf einem Sattelschlepper, einem LKW-Anhänger, einem PKW-Anhänger, einem Pickup, einem Schienenfahrzeug, einem Wasserfahrzeug, in einem Luftfahrzeug, in einem Flugzeug oder in einem Gebäude, insbesondere in einem Lagerhaus, einem Hochregallager oder einem Parkhaus, angeordnet ist.

15. System zur Beladung eines Fahrzeugs nach einem der Ansprüche 1 bis 14, **dadurch gekennzeichnet, dass** die Führungseinrichtung (23, 24) auf einer Hubvorrichtung angeordnet ist und/oder das Tragprofil (10) unterseitig an einem Kraftfahrzeug, insbesondere im Bereich des Unterbodens eines PKWs angeordnet ist.
